# EUROPÄISCHE PATENTSCHRIFT

(11) **EP 3 939 136 B1**
(45) Veröffentlichungstag und Bekanntmachung des Hinweises auf die Patenterteilung: **03.09.2025**
(21) Anmeldenummer: 20708481.5
(22) Anmeldetag: 03.03.2020
(51) Int. Cl.: H02J 3/32, H02M 1/32, H02M 7/493

(54) **BATTERIE-WECHSELRICHTERSYSTEM**
BATTERY INVERTER SYSTEM
SYSTÈME D'ONDULEUR À BATTERIE

(30) Priorität: 12.03.2019 DE 102019106257
(43) Veröffentlichungstag der Anmeldung: 19.01.2022
(73) Patentinhaber: SMA Solar Technology AG, 34266 Niestetal (DE)
(72) Erfinder: HERMELING, Dirk, 32469 Petershagen (DE); ROESINGER, Tim, 34123 Kassel (DE); MOSTAFA, Mohamed, 33100 Paderborn (DE)
(86) Internationale Anmeldenummer: PCT/EP2020/055491
(87) Internationale Veröffentlichungsnummer: WO 2020/182530

(56) Entgegenhaltungen:
- CN-A- 107 425 704
- MONICA P ET AL: "Control strategies of parallel operated inverters in renewable energy application: A review", RENEWABLE AND SUSTAINABLE ENERGY REVIEWS, ELSEVIERS SCIENCE, NEW YORK, NY, US, vol. 65, 25 July 2016 (2016-07-25), pages 885 - 901, XP029707819, ISSN: 1364-0321, DOI: 10.1016/J.RSER.2016.06.075

## Beschreibung

Die Erfindung betrifft ein Batterie-Wechselrichtersystem mit einer Mehrzahl parallel geschalteter Batterie-Wechselrichtereinheiten.

Batterie-Wechselrichtersysteme werden zunehmend eingesetzt, um überschüssige Energie aus öffentlichen Energieversorgungsnetzen vorübergehend zu speichern, und um netzstützende Funktionen bereitzustellen. Hierzu sind entsprechend hohe Speicherkapazitäten der Energiespeicher, typischerweise Lithium-Ionen-Batterien, im Bereich mehrerer Megawattstunden, sowie Wechselrichterleistungen im Megawatt-Bereich erforderlich. Für derartige Anwendungen werden in der Regel eine Mehrzahl von Wechselrichter-Brücken AC-seitig parallelgeschaltet, um die erforderliche Wandlerleistung bereitzustellen. Es ist bekannt, jede der Wechselrichter-Brücken DC-seitig mit einer eigenen Batterieeinheit zu verbinden, und die Batterieeinheiten nicht zu koppeln.

Für eine besonders effizientes und kostengünstiges Batterie-Wechselrichtersystem ist es wünschenswert, die Wechselrichter-Brücken mit dem gleichen Ansteuer-Pulsmuster, also mit einer gemeinsamen Steuerung betreiben zu können. Gleichzeitig entsteht eine weitere Kostenersparnis durch die Verwendung von AC-Filterdrosseln, die dadurch besonders kostengünstig hergestellt werden können, dass sie Kreisströmen zwischen den Wechselrichter-Brücken nicht entgegenwirken. Durch den Wegfall der Notwendigkeit, eine magnetische Kopplung zwischen AC-Filterdrosseln unterschiedlicher Wechselrichter-Brücken vorzusehen, kann die Bauform der Filterdrossel derart vereinfacht werden, dass eine enorme Kostenersparnis ermöglicht wird.

Als Folge dieser Vereinfachungen entsteht allerdings die Notwendigkeit, die Batterieeinheiten parallel zu schalten, so dass an den DC-Eingängen der Wechselrichter-Brücken identische Eingangsspannungen anliegen und sichergestellt ist, dass alle Batterieeinheiten jederzeit den gleichen Ladezustand aufweisen. Nachteilig bei dieser Parallelschaltung der Batterieeinheiten ist das Verhalten im Fehlerfall, insbesondere im Fall eines Kurzschlusses in einem Wechselrichter. In diesem Fall entstehen DC-seitig derart hohe Kurzschluss-Ströme, dass es nicht möglich ist, die gesamte Batterieeinheit mit einer gemeinsamen Sicherung abzusichern. Vielmehr ist es notwendig, die Batterieeinheit in viele Einzeleinheiten aufzuteilen, hier vereinfacht als Batterie-Racks bezeichnet, und diese mit Racksicherungen einzeln abzusichern. Der Begriff Racksicherung bezieht sich als nicht notwendigerweise auf die Sicherung einer in ein Rack eingebauten Einzeleinheit, sondern bezieht sich auf eine Einzeleinheit, deren Betriebsstrom beziehungsweise Kurzschlussstrom derart dimensioniert ist, dass eine ausreichend schnelle Sicherung kostengünstig verfügbar ist. Derzeit trifft dies für Sicherungen mit einem Nennwert von bis zu 200 A zu.

Dennoch führt der Kurzschlussfall nach dem Stand der Technik dazu, dass bei parallel geschalteten Batterieeinheiten im Extremfall bei Kurzschluss eines Wechselrichters alle Racksicherungen auslösen und getauscht werden müssen.

Das Dokument CN 107425704 A zeigt eine Wandlervorrichtung mit einer Vielzahl von Gleichstromquellen, die individuell abgesichert sind und dann miteinander direkt parallel geschaltet sind und über eine Mehrzahl von ebenfalls eingangsseitig und ausgangsseitig parallel geschalteten Wechserichtern Energie mit einem Netz austauschen. Jeder der Wechselrichter ist mit einer weiteren eingangsseitig angeordneten Sicherung ausgestattet. Nachteilig ist hierbei, dass der gesamte Strom eines Wechselrichters jederzeit über diese weitere, ihm zugeordnete Sicherung fließen muss, was dem Einsatz kostengünstiger Sicherungen oft entgegensteht.

Es ist daher Aufgabe der vorliegenden Erfindung, ein Batterie-Wechselrichtersystem mit DC-seitig parallelgeschalteten Batterieeinheiten aufzuzeigen, das derart abgesichert werden kann, dass bei Kurzschluss eines Wechselrichters nur ein Teil der Racksicherungen getauscht werden muss.

Diese Aufgabe wird gelöst durch ein Batterie-Wechselrichtersystem mit den Merkmalen des unabhängigen Anspruchs 1. Bevorzugte Ausführungsformen des Batterie-Wechselrichtersystems sind in den abhängigen Ansprüchen beschrieben. Erfindungsgemäß weist ein Batterie-Wechselrichtersystem eine Mehrzahl Batterie-Wechselrichtereinheiten auf, wobei jede der Batterie-Wechselrichtereinheiten einen mehrphasigen, bevorzugt dreiphasigen, Wechselrichter und eine mit dem Wechselrichter DC-seitig verbundene Batterieeinheit umfasst. Die Batterieeinheiten weisen jeweils eine Vielzahl parallel zueinander geschalteter, mit Racksicherungen gegen Überstrom abgesicherter Batterieracks auf, und die Batterie-Wechselrichtereinheiten sind AC-seitig parallelgeschaltet und jeweils zum Betrieb mit einem gemeinsamen Ansteuerpulsmuster eingerichtet, wobei die Batterie-Wechselrichtereinheiten untereinander über Ausgleichssicherungen DC-seitig verbunden sind, und wobei die Ausgleichssicherungen derart gestaltet sind, dass im Fall eines Kurzschlusses in einem der Wechselrichter die Ausgleichssicherungen schneller auslösen als die Racksicherungen. Die Verbindung der Batterie-Wechselrichtereinheiten über die Ausgleichssicherungen kann von jedem Punkt der elektrischen Verbindung zwischen den Batterieeinheiten und den Wechselrichtern der zu verbindenden Batterie-Wechselrichtereinheiten erfolgen. Die Verbindung erfolgt hierbei derart, dass die DC-seitige Eingangsspannung aller Wechselrichter des Batterie-Wechselrichtersystems bei intakten Ausgleichssicherungen gleich ist.

Durch diese Ausgestaltung des Batterie-Wechselrichtersystems werden im normalen Betrieb Ausgleichsströme zwischen den Batterie-Wechselrichtereinheiten minimiert, ohne dass es AC-seitig aufwändiger Filteranordnungen bedarf, wobei gleichzeitig dennoch sichergestellt ist, dass die Batterieeinheiten jederzeit den gleichen Ladezustand aufweisen, wodurch deren Kapazität optimal genutzt werden kann. Durch die geringen Ausgleichsströme sind als Ausgleichssicherungen damit Sicherungen mit einem Nennwert verwendbar, die dem Nennwert der Racksicherungen entsprechen, zumindest sollte zwischen beiden Nennwerten nicht mehr als ein Faktor zwei liegen, wobei der Nennwert der Ausgleichssicherung nicht einmal höher als der Nennwert der Racksicherung sein muss, sondern sogar darunter liegen kann. Selbst bei einem höheren Nennwert der Ausgleichssicherung gegenüber den Racksicherungen ist hierdurch ein schnelleres Auslösen der Ausgleichssicherung im Kurzschlussfall gewährleistet, da in diesem Fall über die Ausgleichssicherung zumindest der Gesamtstrom einer gesamten Batterieeinheit mit seiner Vielzahl von Einzeleinheiten und damit ein gegenüber dem über eine Racksicherung fließenden Kurzschlussstrom eines Batterieracks um ein Vielfaches höherer Strom fließt und über eine I²t-Auslösecharakteristik ein früheres Auslösen sicherstellt.

So kann beispielsweise bei einer Batterieeinheit, die aus fünf parallelgeschalteten Einzeleinheiten gebildet ist, von denen jede Einzeleinheit einen Kurzschlussstrom von 250 A bereitstellt, die Batterieeinheit einen Kurzschlussstrom von 1250A liefern. Dieser Kurzschlussstrom einer zu einer kurzschlussverursachenden Batterie-Wechselrichtereinheit benachbarten Batterieeinheit fließt dann über die Ausgleichssicherung, so dass bei einer zu erwartenden I²t-Auslösecharakteristik die Ausgleichssicherung innerhalb einer gegenüber einer Racksicherung gleichen Nennwerts wie der Nennwert der Ausgleichssicherung um einen Faktor 25 (entsprechend (1250A/250A)²) kürzeren Auslösezeit auslöst wie eine Racksicherung der Batterieeinheit. Dieses Auslöseverhalten gewährleistet auch dann ein schnelleres Auslösen einer Ausgleichssicherung gegenüber einer Racksicherung, wenn der Nennwert der Ausgleichssicherung um einen Faktor 2 höher als der Nennwert der Racksicherung ist. Eine höhere Anzahl der Racksicherungen beziehungsweise Einzeleinheiten innerhalb einer Batterieeinheit unterstützt diesen Effekt weiter, da der Kurzschlussstrom der gesamten Batterieeinheit gegenüber dem über die Racksicherung fließenden Kurzschlussstrom einer Einzeleinheit mit der Anzahl der Einzeleinheiten skaliert. Aus dem gleichen Grund löst eine Ausgleichssicherung, über die der Kurzschlussstrom mehrerer Batterieeinheiten fließt, zuverlässig schneller aus als eine Ausgleichssicherung (gleichen Nennwerts), über die der Kurzschlussstrom einer einzigen Batterieeinheit fließt.

Bei einer Verwendung von Sicherungen mit einem Nennwert zwischen 100 A und 1000 A für die Ausgleichsicherungen und die Racksicherungen kann ein ausreichend schnelles Auslöseverhalten bei noch geringen Sicherungskosten sichergestellt werden, um eine Beschädigung der Batterieeinheiten im Kurzschlussfall zu vermeiden. Derzeit bieten sich besonders Sicherungen mit einem Nennwert von 200 A an.

In einer bevorzugten Ausführungsform der Erfindung sind benachbarte Batterie-Wechselrichtereinheiten jeweils über eine Ausgleichssicherung miteinander verbunden. Es kann so eine Ausgleichssicherung weniger verwendet werden als das Batterie-Wechselrichtersystem Batterie-Wechselrichtereinheiten aufweist. Allerdings können im Kurzschlussfall mehrere Ausgleichssicherungen auslösen und müssen dann anschließend getauscht werden.

In einer weiteren bevorzugten Ausführungsform der Erfindung ist jede der Batterie-Wechselrichtereinheiten über eine Ausgleichssicherung mit einem gemeinsamen Sternpunkt des Batterie-Wechselrichtersystems verbunden. Hier entspricht die Anzahl der Ausgleichssicherungen der Anzahl der Batterie-Wechselrichtereinheiten. Im Kurzschlussfall löst in dieser Ausführungsform aber nur diejenige Ausgleichssicherung aus, die den kurzschließenden Wechselrichter mit dem Sternpunkt verbindet, da über diese Ausgleichssicherung der Kurzschlussstrom aller anderen Batterieeinheiten fließt, während über alle anderen Ausgleichssicherungen jeweils nur der Kurzschlussstrom einer einzelnen Batterieeinheit fließt.

Es ist vorteilhaft, die Batterie-Wechselrichtereinheiten des erfindungsgemäßen Batterie-Wechselrichtersystems leistungsgleich auszuführen, da hierdurch besonders geringe Ausgleichströme zwischen den Wechselrichtern erzielbar sind. Besonders vorteilhaft ist hierbei die Ausgestaltung als baugleiche Wechselrichter, so dass aufgrund der Ansteuerung mit einem gemeinsamen Ansteuer-Pulsmuster zumindest theoretisch Ausgleichsströme vollständig verhindert werden können.

Weiterhin vorteilhaft ist es, wenn zwischen den Batterie-Wechselrichtereinheiten (15) ein gleiches Verhältnis zwischen einer Speicherkapazität der jeweiligen Batterieeinheit (3.1-3.3) und einer Leistung des zugeordneten Wechselrichters (2.1-2.3) vorliegt. Hierdurch werden im Betrieb ebenfalls Ausgleichsströme über die Ausgleichssicherungen minimiert.

In einer bevorzugten Ausführungsvariante ist das Batterie-Wechselrichtersystem beziehungsweise sind die Wechselrichter ohne Neutralleiteranschluss ausgeführt. Als Folge können entsprechende Neutralleiterströme, die über die Ausgleichsleitungen ausgeglichen werden müssten, erst gar nicht entstehen.

In einer bevorzugten Ausführung sind die Wechselrichter ohne DC/DC-Wandler ausgeführt. Hierdurch ist sichergestellt, dass an den Eingängen der Wechselrichter-Brücken identische Gleichspannungen anliegen, was ebenfalls dazu beiträgt, dass Ausgleichsströme zwischen den Wechselrichter vermieden werden.

Es ist zwar denkbar, Kreisströme mit Hilfe von geeigneten, kreisstromunterdrückenden AC-Drosselanordnungen klein zu halten, aber solche Drosseln stellen einen erheblichen Zusatzaufwand für das Batterie-Wechselrichtersystem dar. Unter dem Begriff eines kreisstromunterdrückenden Sinusfilters wird hierbei eine Drosselanordnung verstanden, bei der die Induktivität für das Nullsystem die Induktivität für das Mitsystem erreicht oder übersteigt.

Die vorstehend beschriebenen Maßnahmen, gerichtet auf eine Minimierung von Ausgleichsströmen, erlauben die Ausgestaltung des Batterie-Wechselrichtersystem in der Art, dass auf kreisstromunterdrückende AC-Drosselanordnungen verzichtet werden kann, zum Beispiel, indem Filterdrosseln der Sinusfilter der Batterie-Wechselrichtereinheiten untereinander nicht magnetisch gekoppelt sind. Gegebenenfalls vorhandene Filterkondensatoren der Sinusfilter sind bevorzugt jeweils mit einem gemeinsamen Bezugspotential verbunden. Dies ist beispielsweise bei einer separaten Dreischenkeldrossel als Sinusfilter für jeden der Wechselrichter der Fall. Es wird auf diese Art ein besonders kostengünstiges Batterie-Wechselrichtersystem erreicht.

Zusätzlich ist es denkbar, dass die Wechselrichter des Batterie-Wechselrichtersystems hinter dem Sinusfilter AC-seitig parallelgeschaltet sind, wobei den AC-seitig parallel geschalteten Batterie-Wechselrichtereinheiten eine gemeinsame Filterdrossel beziehungsweise ein gemeinsamer Netzfilter mit weiteren Komponenten, insbesondere gemeinsamen Filterkondensatoren, nachgeschaltet ist.

Die Wechselrichter des Batterie-Wechselrichtereinheiten können in separaten Gehäusen untergebracht sein, es ist aber auch denkbar, dass eine Mehrzahl von Batterie-Wechselrichtereinheiten, zumindest aber deren Wechselrichter und Sinusfilter, in einem gemeinsamen Gehäuse untergebracht sind.

Im Folgenden wird die Erfindung mithilfe von Figuren dargestellt, von denen
- Fig. 1: ein Batterie-Wechselrichtersystem nach dem Stand der Technik mit parallel geschalteten Batterieeinheiten,
- Fig. 2: eine erste Ausführung eines erfindungsgemäßen Batterie-Wechselrichtersystems, und
- Fig. 3: eine zweite Ausführung eines erfindungsgemäßen Batterie-Wechselrichtersystems zeigt.

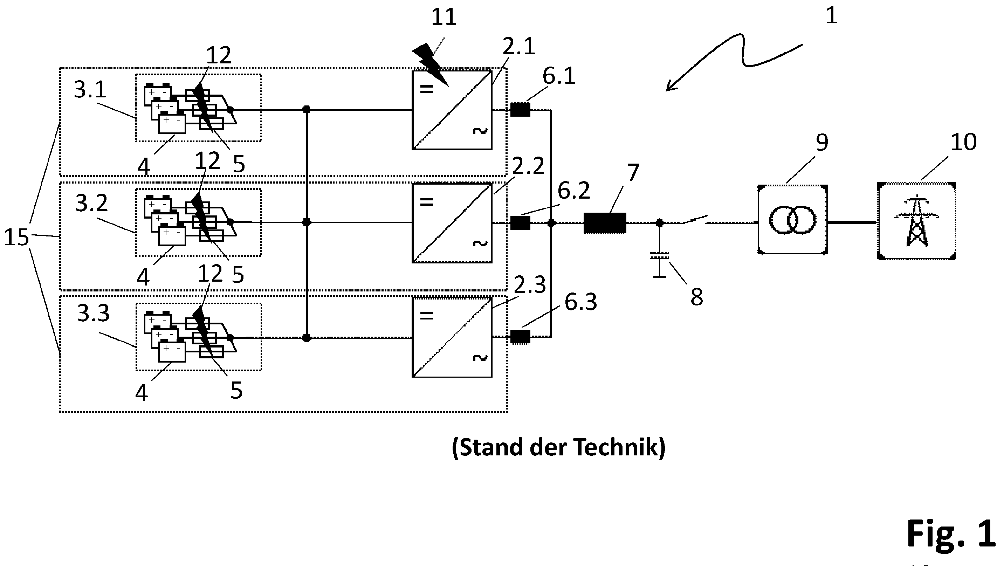

Fig. 1 zeigt ein Batterie-Wechselrichtersystem 1 mit drei Wechselrichtern 2.1 bis 2.3, die AC-seitig über den Wechselrichtern 2.1 bis 2.3 zugeordnete Sinusfilter 6.1 bis 6.3 an einen gemeinsamen AC-Anschlusspunkt angeschlossen sind. Die Sinusfilter 6.1 bis 6.3 sind hier nur als Filterdrossel gezeigt, können aber auch weitere Komponenten, insbesondere Filterkondensatoren enthalten.

Ausgehend von dem gemeinsamen Anschlusspunkt ist das Batterie-Wechselrichtersystem 1 über eine gemeinsame Filterdrossel 7 und einem gemeinsamen Filterkondensator 8, eine Trennstelle und einen Transformator 9 an ein Netz 10 angeschlossen. Dies umfasst in allen beschriebenen Ausführungen auch den Fall, dass bei mehrphasigen Wechselrichtern, beispielsweise dreiphasigen Wechselrichtern, die gemeinsame Filterdrossel 7 für jeden Phase eine separate Filterdrossel oder eine Filterdrosselanordnung mit Filterwicklungen für jede der Phasen aufweist, die auch magnetisch gekoppelt sein können. Ebenso kann für jede der Phase ein separater Filterkondensator vorgesehen sein.

Auf der DC-Seite sind die Wechselrichter 2.1 bis 2.3 mit Batterieeinheiten 3.1 bis 3.3 verbunden, so dass jeweils einem der Wechselrichter eine Batterieeinheit zugeordnet ist und beide eine Batterie-Wechselrichtereinheit 15 bilden. Die Batterie-Wechselrichtereinheiten 15 sind ihrerseits über Verbindungsleitungen, beispielsweise einen DC-Bus, parallelgeschaltet. Die Batterieeinheiten 3.1 bis 3.3 sind aus einer Vielzahl von Einzeleinheiten 4 als Energiespeicher gebildet. Die Einzeleinheiten 4 können jeweils als Batteriepacks in Regaleinheiten, den sogenannten Racks, bevorzugt entnehmbar untergebracht sein. Jede Einzeleinheit 4 ist über eine Racksicherung 5 gegen Überstrom, beispielsweise infolge eines Kurzschlusses, abgesichert. Die Racksicherungen 5 weisen einen Nennwert als Stromgrenze auf, bei dessen dauerhafter Überschreitung die Racksicherung 5 auslöst und die zugeordnete Batterieeinheit 4 von den Wechselrichtern 2.1 bis 2.3 trennt. Nach dem Auslösen ist die Racksicherung als Einwegsicherung defekt und muss gewechselt werden.

Im Fall eines Fehlerereignisses, hier als Kurzschluss 11 beispielhaft am Wechselrichter 2.1 symbolisiert, stellen alle Batterieeinheiten jeweils ihren Kurzschlussstrom bereit, der den Nennwert der jeweiligen Racksicherungen 5 übersteigt, so dass an allen Racksicherungen 5 ein Auslöseereignis 12 eintritt. Als Folge des Kurzschlusses 11 müssen demzufolge im Stand der Technik alle Racksicherungen 5 getauscht werden, was mit hohen Kosten und Aufwand verbunden ist.

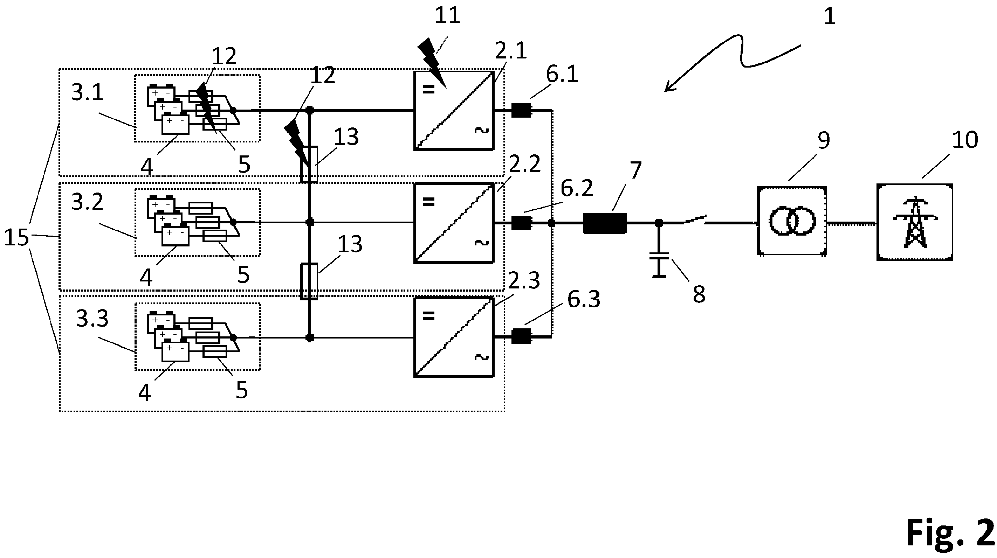

In Fig. 2 ist eine erste Ausführung eines erfindungsgemäßen Batterie-Wechselrichtersystems 1 gezeigt. Auch hier ist jedem Wechselrichter 2.1 bis 2.3 jeweils eine Batterieeinheit 3.1 bis 3.3 unter Bildung einer Batterie-Wechselrichtereinheit 15 zugeordnet. Im Unterschied zum Batterie-Wechselrichtersystem nach Fig. 1 werden die Verbindungsleitungen zwischen den Batterie-Wechselrichtereinheiten 15 über Ausgleichssicherungen 13 gebildet, wobei jeweils zwischen benachbarten Batterie-Wechselrichtereinheiten 15 eine Ausgleichssicherung 13 angeordnet ist. Es befindet sich somit eine Ausgleichssicherung weniger im Batterie-Wechselrichtersystem, als es Batterieeinheiten beziehungsweise Wechselrichter gibt. Zu den gezeigten drei Batterie-Wechselrichtereinheiten 15 können auch weitere Batterie-Wechselrichtereinheiten hinzutreten und AC-seitig parallelgeschaltet und DC-seitig über Ausgleichssicherungen mit den anderen Batterie-Wechselrichtereinheiten verbunden werden, um die Gesamtleistung des Batterie-Wechselrichtersystems 1 zu erhöhen.

Im Fall eines Kurschlusses 11, hier wieder für Wechselrichter 2.1 gezeigt, tritt weiterhin ein Auslöseereignis 12 für alle Racksicherungen 5 der betroffenen Batterie-Wechselrichtereinheit 15 auf. Die Racksicherungen 5 der anderen Batterie-Wechselrichtereinheiten, hier die Racksicherungen 5 der Batterieeinheiten 3.2 und 3.3, werden vor den Auslösen geschützt, weil die direkt mit dem kurzschließenden Wechselrichter verbundenen Ausgleichssicherungen 13 aufgrund des dort fließenden, höheren Kurzschlussstroms vor den geschützten Racksicherungen 5 auslösen und den Kurzschluss der entsprechenden Batterieeinheiten, hier der Batterieeinheiten 3.2 und 3.3, unterbinden. Hierbei unterstützt die Tatsache, dass über die Ausgleichssicherung 13 nicht nur der Kurzschlussstrom einer Einzeleinheit 4, sondern der kumulierte Kurzschlussstrom der Batterieeinheiten 3.2 und 3.3, fließt, und ein schnelles Auslösen der entsprechenden Ausgleichssicherung 13 gewährleistet. Ein Austausch der Racksicherungen 5 der Batterieeinheiten 3.2 und 3.3 ist somit nicht erforderlich, nur die ausgelöste Ausgleichssicherung 13 muss beziehungsweise die ausgelösten Ausgleichssicherungen 13 sowie die alle Racksicherungen 5 der betroffenen Batterieeinheit 3.1 müssen getauscht werden.

Um ein unerwünschtes Auslösen einer Ausgleichssicherung bereits im Rahmen einer normalen Betriebsführung des Batterie-Wechselrichtersystems 1, also ohne Kurzschlussfall, zu verhindern, ist es erforderlich, dass das Batterie-Wechselrichtersystem 1 so betrieben wird, dass Ausgleichs- oder Kreisströme zwischen den Wechselrichtern 2.1 bis 2.3 durch die Ansteuerung der in den Wechselrichtern enthaltenen Wechselrichterbrücken minimiert werden. Dies kann dadurch erreicht werden, dass die Wechselrichter-Brücken mit dem gleichen Ansteuer-Pulsmuster angesteuert werden, und die Wechselrichter leistungsgleich und insbesondere baugleich ausgeführt sind. Grundsätzlich können Ausgleichsströme zwischen den Wechselrichtern auch durch aufwändige AC-Filteranordnungen, bei denen insbesondere Filterwicklungen zwischen Phasenausgängen unterschiedlicher Wechselrichter magnetisch gekoppelt werden, und/oder eine individuelle und aufwändige Ansteuerung der einzelnen Wechselrichter reduziert werden, wodurch der Kostenvorteil der Erfindung dann allerdings nicht realisiert wird.

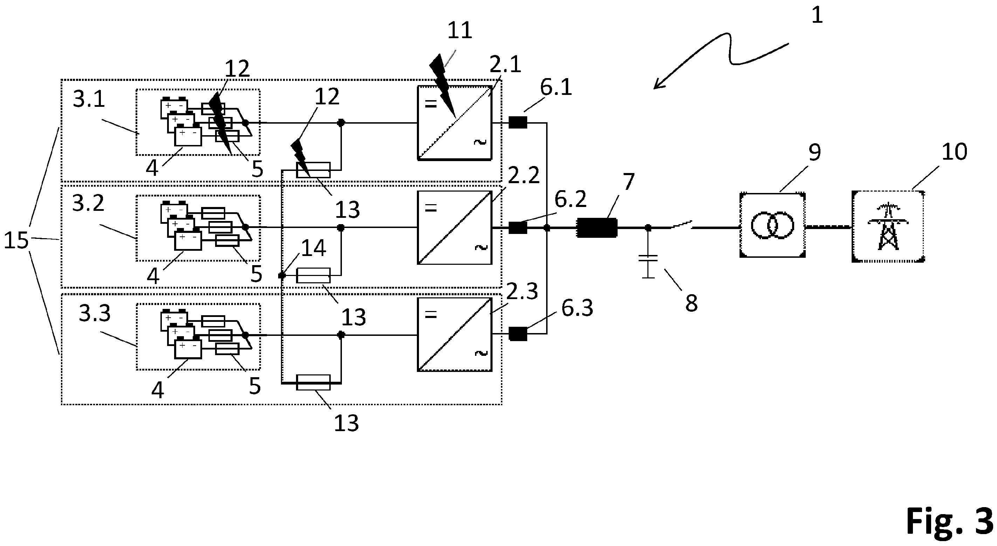

Fig. 3 zeigt eine zweite Ausführung eines erfindungsgemäßen Batterie-Wechselrichtersystems 1. Im Unterschied zur Ausführungsform nach Fig. 2 ist in dieser Ausführungsform jede der Verbindungsleitungen zwischen den Batterie-Wechselrichtereinheiten 15 über eine Ausgleichssicherung 13 mit einem gemeinsamen Sternpunkt 14 verbunden. Hier entspricht also die Anzahl der Ausgleichssicherungen 13 der Anzahl der Batterie-Wechselrichtereinheiten 15. Im Falle eines Kurzschluss 11, hier wiederum gezeigt am Wechselrichter 2.1, tritt, wie auch in der Ausführung nach Fig. 2, ein Auslöseereignis 12 an allen Racksicherungen 5 der dem kurzschließenden Wechselrichter 2.1 zugeordneten Batterieeinheit 3.1 ein. Zusätzlich tritt ein Auslöseereignis 12 auch an der Ausgleichssicherung 13 ein, die den kurzschließenden Wechselrichter 2.1 mit dem Sternpunkt 14 verbindet. In dieser Ausführungsform löst also in jedem Fall nur eine der Ausgleichssicherungen 13 aus, was auch dadurch unterstützt wird, dass über die auslösende Ausgangssicherung 13 der Kurzschlussstrom aller übrigen Batterieeinheiten, hier der Batterieeinheiten 3.2 bis 3.3, fließt. Durch das Auslöseereignis 12 der betroffenen Ausgleichssicherung 13 werden alle übrigen Racksicherungen 5 vor dem Auslösen geschützt und müssen nicht getauscht werden.

### Bezugszeichenliste

- 1: Batterie-Wechselrichtersystem
- 2.1-2.3: Wechselrichter
- 3.1-3.3: Batterieeinheit
- 4: Einzeleinheit
- 5: Racksicherung
- 6.1-6.3: Sinusfilter
- 7: Filterdrossel
- 8: Filterkondensator
- 9: Transformator
- 10: Netz
- 11: Kurzschluss
- 12: Auslöseereignis
- 13: Ausgleichssicherung
- 14: Sternpunkt
- 15: Batterie-Wechselrichtereinheit

## Patentansprüche

1. Batterie-Wechselrichtersystem (1), umfassend eine Mehrzahl Batterie-Wechselrichtereinheiten (15), wobei
- jede der Batterie-Wechselrichtereinheiten (15) einen mehrphasigen Wechselrichter (2.1-2.3) und eine mit dem Wechselrichter (2.1-2.3) DC-seitig verbundene Batterieeinheit (3.1-3.3) umfasst,
- die Batterieeinheit (3.1-3.3) eine Vielzahl parallel zueinander geschalteter, mit Racksicherungen (5) gegen Überstrom abgesicherter Einzeleinheiten (4) aufweist, und
- die Batterie-Wechselrichtereinheiten (15) AC-seitig parallelgeschaltet und zum Betrieb mit einem gemeinsamen Ansteuerpulsmuster eingerichtet sind,
**dadurch gekennzeichnet, dass**
die Batterie-Wechselrichtereinheiten (15) untereinander über Ausgleichssicherungen (13) DC-seitig verbunden sind, und wobei die Ausgleichssicherungen (13) derart gestaltet sind, dass im Fall eines Kurzschlusses in einem der Wechselrichter (2.1-2.3) die Ausgleichssicherungen (13) schneller auslösen als die Racksicherungen (5).

2. Batterie-Wechselrichtersystem (1) nach Anspruch 1, wobei benachbarte Batterie-Wechselrichtereinheiten (15) jeweils über eine Ausgleichssicherung (13) miteinander verbunden sind.

3. Batterie-Wechselrichtersystem (1) nach Anspruch 1, wobei jede der Batterie-Wechselrichtereinheiten (15) über eine Ausgleichssicherung (13) mit einem gemeinsamen Sternpunkt (14) verbunden ist.

4. Batterie-Wechselrichtersystem (1) nach einem der vorangehenden Ansprüche, wobei die Wechselrichter (2.1-2.3) dreiphasig ausgeführt sind.

5. Batterie-Wechselrichtersystem (1) nach einem der vorangehenden Ansprüche, wobei die Batterie-Wechselrichtereinheiten (15) baugleich und/oder leistungsgleich ausgeführt sind.

6. Batterie-Wechselrichtersystem (1) nach einem der vorangehenden Ansprüche, wobei unter den Batterie-Wechselrichtereinheiten (15) ein Verhältnis zwischen einer Speicherkapazität der jeweiligen Batterieeinheit (3.1-3.3) und einer Leistung des zugeordneten Wechselrichters (2.1-2.3) gleich ist.

7. Batterie-Wechselrichtersystem (1) nach einem der vorangehenden Ansprüche, wobei die Wechselrichter (2.1-2.3) ohne Neutralleiteranschluss ausgeführt sind.

8. Batterie-Wechselrichtersystem (1) nach einem der vorangehenden Ansprüche, wobei die Wechselrichter (2.1-2.3) ohne DC/DC-Wandler ausgeführt sind.

9. Batterie-Wechselrichtersystem (1) nach einem der vorangehenden Ansprüche, wobei ein Nennstrom der Racksicherungen (5) und ein Nennstrom der Ausgleichssicherung (13) sich um nicht mehr als einen Faktor zwei unterscheiden, bevorzugt gleich sind.

10. Batterie-Wechselrichtersystem (1) nach einem der vorangehenden Ansprüche, wobei ein Nennstrom der Racksicherungen (5) und ein Nennstrom der Ausgleichssicherung (13) innerhalb eines Bereichs zwischen 100 A und 1000 A liegen.

11. Batterie-Wechselrichtersystem (1) nach einem der vorangehenden Ansprüche, wobei Filterdrosseln von Sinusfiltern (6.1-6.3) der Batterie-Wechselrichtereinheiten untereinander nicht magnetisch gekoppelt und Filterkondensatoren der Sinusfilter (6.1-6.3), sofern vorhanden, jeweils mit einem gemeinsamen Bezugspotential verbunden sind.

12. Batterie-Wechselrichtersystem (1) nach einem der vorangehenden Ansprüche, wobei den AC-seitig parallelgeschalteten Batterie-Wechselrichtereinheiten eine gemeinsame Filterdrossel (7) nachgeschaltet ist.

## Claims

1. A battery inverter system (1), comprising a plurality of battery inverter units (15), wherein
- each of the battery inverter units (15) comprises a multiphase inverter (2.1-2.3) and a battery unit (3.1-3.3) connected to the inverter (2.1-2.3) on the DC side,
- the battery unit (3.1-3.3) comprises a plurality of individual units (4) connected in parallel to one another and protected against overcurrent by means of rack fuses (5), and
- the battery inverter units (15) are connected in parallel on the AC side and configured to operate with a common drive pulse pattern,
**characterized in that**
the battery inverter units (15) are interconnected on the DC side via compensation fuses (13), and wherein the compensation fuses (13) are provided such that in the event of a short circuit in one of the inverters (2.1-2.3), the compensation fuses (13) are triggered faster than the rack fuses (5).

2. The battery inverter system (1) as claimed in claim 1, wherein adjacent battery inverter units (15) are connected to one another via a compensation fuse (13).

3. The battery inverter system (1) as claimed in claim 1, wherein each of the battery inverter units (15) is connected to a common neutral point (14) via a compensation fuse (13).

4. The battery inverter system (1) as claimed in one of the preceding claims, wherein the inverters (2.1-2.3) are provided as three-phase inverters.

5. The battery inverter system (1) as claimed in one of the preceding claims, wherein the battery inverter units (15) are provided as identical in construction and/or power.

6. The battery inverter system (1) as claimed in one of the preceding claims, wherein among the battery inverter units (15), a ratio between a storage capacity of the respective battery unit (3.1-3.3) and a power of the associated inverter (2.1-2.3) is equal.

7. The battery inverter system (1) as claimed in one of the preceding claims, wherein the inverters (2.1-2.3) are provided without a neutral conductor connection.

8. The battery inverter system (1) as claimed in one of the preceding claims, wherein the inverters (2.1-2.3) are provided without DC/DC converters.

9. The battery inverter system (1) as claimed in one of the preceding claims, wherein a nominal current of the rack fuses (5) and a nominal current of the compensation fuse (13) differ by no more than a factor of two and are preferably the same.

10. The battery inverter system (1) as claimed in one of the preceding claims, wherein a nominal current of the rack fuses (5) and a nominal current of the compensation fuse (13) are within a range between 100 A and 1000 A.

11. The battery inverter system (1) as claimed in one of the preceding claims, wherein filter chokes of sinusoidal filters (6.1-6.3) of the battery inverter units are not magnetically coupled to one another and filter capacitors of the sinusoidal filters (6.1-6.3), if present, are each connected to a common reference potential.

12. The battery inverter system (1) as claimed in one of the preceding claims, wherein a common filter choke (7) is connected downstream of the battery inverter units connected in parallel on the AC side.

## Revendications

1. Système d'onduleur à batterie (1) comprenant une pluralité d'unités d'onduleur à batterie (15), dans lequel
chacune des unités d'onduleur à batterie (15) comprend un onduleur polyphasé (2.1-2.3) et une unité de batterie (3.1-3.3) connectée côté CC à l'onduleur (2.1-2.3), l'unité de batterie (3.1-3.3) présente une pluralité d'unités individuelles (4) montées en parallèle les unes avec les autres et protégées contre les surintensités par des fusibles de rack (5), et
les unités d'onduleur de batterie (15) sont montées en parallèle côté CA et sont conçues pour fonctionner avec un modèle d'impulsion de commande commun, **caractérisé en ce que**
les unités d'onduleur de batterie (15) sont reliées entre elles côté CC par des fusibles de compensation (13), et les fusibles de compensation (13) étant conçus de telle sorte qu'en cas de court-circuit dans l'un des onduleurs (2.1-2.3), les fusibles de compensation (13) se déclenchent plus rapidement que les fusibles de rack (5).

2. Système d'onduleur de batterie (1) selon la revendication 1, dans lequel les unités d'onduleur de batterie adjacentes (15) sont connectées les unes aux autres par l'intermédiaire d'un fusible de compensation (13).

3. Système d'onduleur de batterie (1) selon la revendication 1, dans lequel chacune des unités d'onduleur de batterie (15) est connectée à un point neutre commun (14) par l'intermédiaire d'un fusible de compensation (13).

4. Système d'onduleur de batterie (1) selon l'une des revendications précédentes, dans lequel les onduleurs (2.1-2.3) sont fournis en tant qu'onduleurs triphasés.

5. Système d'onduleur de batterie (1) selon l'une des revendications précédentes, dans lequel les unités d'onduleur de batterie (15) sont identiques en termes de construction et/ou de puissance.

6. Système d'onduleur de batterie (1) selon l'une des revendications précédentes, dans lequel, parmi les unités d'onduleur de batterie (15), le rapport entre la capacité de stockage de l'unité de batterie respective (3.1-3.3) et la puissance de l'onduleur associé (2.1-2.3) est égal.

7. Système d'onduleur de batterie (1) selon l'une des revendications précédentes, dans lequel les onduleurs (2.1-2.3) sont fournis sans connexion de conducteur neutre.

8. Système d'onduleur de batterie (1) selon l'une des revendications précédentes, dans lequel les onduleurs (2.1-2.3) sont dépourvus de convertisseurs DC/DC.

9. Système d'onduleur de batterie (1) selon l'une des revendications précédentes, dans lequel un courant nominal des fusibles de rack (5) et un courant nominal du fusible de compensation (13) ne diffèrent pas de plus d'un facteur de deux et sont de préférence les mêmes.

10. Système d'onduleur de batterie (1) selon l'une des revendications précédentes, dans lequel le courant nominal des fusibles de rack (5) et le courant nominal du fusible de compensation (13) se situent dans une plage comprise entre 100 A et 1000 A.

11. Système d'onduleur de batterie (1) selon l'une des revendications précédentes, dans lequel les selfs des filtres sinusoïdaux (6.1-6.3) des unités d'onduleur de batterie ne sont pas couplées magnétiquement les unes aux autres et les condensateurs de filtre des filtres sinusoïdaux (6.1-6.3), s'ils sont présents, sont chacun connectés à un potentiel de référence commun.

12. Système d'onduleur de batterie (1) selon l'une des revendications précédentes, dans lequel une self de filtrage commune (7) est connectée en aval des unités d'onduleur de batterie connectées en parallèle sur le côté CA.
